Europäisches Patentamt

European Patent Office

Office européen des brevets

(19)

(11) Veröffentlichungsnummer : **0 016 373**
**B1**

(12) **EUROPÄISCHE PATENTSCHRIFT**

(45) Veröffentlichungstag der Patentschrift :
19.05.82

(21) Anmeldenummer : **80101102.4**

(22) Anmeldetag : **05.03.80**

(51) Int. Cl.$^3$ : **C 08 J 3/02, C 08 L 33/08**

(54) Dispersion von Acrylesterkautschuk und Verfahren zu ihrer Herstellung.

(30) Priorität : 15.03.79 DE 2910153

(43) Veröffentlichungstag der Anmeldung :
01.10.80 (Patentblatt 80/20)

(45) Bekanntmachung des Hinweises auf die Patenterteilung : 19.05.82 Patentblatt 82/20

(84) Benannte Vertragsstaaten :
BE DE FR GB IT NL

(56) Entgegenhaltungen :
DE - A - 2 426 525
DE - B2 - 1 928 026
GB - A - 1 301 068
US - A - 3 903 040

(73) Patentinhaber : BAYER AG
Zentralbereich Patente, Marken und Lizenzen
D-5090 Leverkusen 1, Bayerwerk (DE)

(72) Erfinder : Lindner, Christian, Dr.
Riehler Strasse 200
D-5000 Köln 60 (DE)
Erfinder : Liebig, Lothar, Dr.
Walter-Flex-Strasse 19
D-5090 Leverkusen 1 (DE)
Erfinder : Ott, Karl-Heinz, Dr.
Paul-Klee-Strasse 54
D-5090 Leverkusen (DE)

## 0 016 373

### Dispersion von Acrylesterkautschuk und Verfahren zu ihrer Herstellung

Die Erfindung betrifft stabile, fließfähige Dispersionen von vernetzten, kautschukartigen Acrylatpolymeren in organischen Flüssigkeiten und ein Verfahren zu ihrer Herstellung.

Wäßrige Dispersionen (Latices) von vernetzten und von unvernetzten Acrylatpolymeren sind bekannt, sie werden meist durch Emulsionspolymerisation erhalten. Für manche Anwendungen braucht man aber stabile Dispersionen von diskreten Mikrogelteilchen aus Kautschuk in organischen Flüssigkeiten. Solche stabilen organischen Kautschukdispersionen können nicht direkt durch radikalische Polymerisation entsprechender Monomerer in organischen Flüssigkeiten hergestellt werden, weil sich während der Polymerisation keine diskreten Kautschukteilchen, sogenannte Mikrogelpartikel, ausbilden, sondern ein kontinuierliches Kautschuknetzwerk, ein Makrogel.

Der Erfindung liegt die Erkenntnis zugrunde, daß man wäßrige Emulsionen von vernetzten kautschukartigen Acrylesterpolymeren in bestimmten organischen Flüssigkeiten dispergieren kann, so daß die Acrylesterpolymere als gequollene Teilchen dispers verteilt sind, und das Wasser der ursprünglichen Emulsion ebenfalls in der organischen Flüssigkeit dispergiert vorliegt (Wasser-in-Öl-Emulsion). Das Wasser kann, falls erforderlich, entfernt werden, indem man die Wasser-in-Öl-Emulsion selektiv bricht, und dann das Wasser mechanisch, physikalisch oder chemisch abtrennt. Für die meisten Anwendungen der erfindungsgemäßen organischen Kautschukdispersionen ist es nicht erforderlich, das Wasser abzutrennen, es muß allerdings stabil dispergiert sein und darf sich nicht als getrennte Phase abscheiden.

Gegenstand der Erfindung sind stabile, fließfähige Dispersionen von Kautschuken in Form diskreter Teilchen eines mittleren Durchmessers von 100 bis 3 000 nm in organischen Flüssigkeiten, die enthalten :
A. als Kautschuk 1 bis 20 Gew.-% (bezogen auf Gesamtdispersion) eines vernetzten Homo- oder Copolymerisats eines $C_1$-$C_{10}$-Alkylacrylats ;
B. 0 bis 20 Gew.-% (bezogen auf Gesamtdispersion) Wasser in Form einer Wasser-in-Öl-Emulsion ;
C. als kontinuierliche organische Phase 99 bis 60 Gew.-% (bezogen auf Gesamtdispersion)
a) $C_1$-$C_{10}$-Alkylacrylate oder Alkylmethacrylate, vorzugsweise Methylmethacrylat, Ethylacrylat oder n-Hexylacrylat, oder
b) ein Gemisch aus 85 bis 50 Gew.-% Styrol oder $\alpha$-Methylstyrol und 15 bis 50 Gew.-% Acrylnitril, Methacrylnitril oder $C_1$-$C_6$-Alkylacrylate oder Alkylmethacrylate, z.B. Methylmethacrylat, Ethylacrylat, n-Hexylacrylat, oder
c) ein Gemisch aus 85 bis 50 Gew.-% $C_1$-$C_{10}$-Alkylacrylat oder Alkylmethacrylat und 15 bis 50 Gew.-% Acrylnitril, Methacrylnitril oder Styrol,
wobei a), b) und c) bis zu 60 Gew.-% eines flüssigen Kohlenwasserstoffs zugemischt enthalten können.

Ein weiterer Gegenstand der Erfindung ist ein Verfahren zur Herstellung dieser stabilen fließfähigen Kautschukdispersion, das dadurch gekennzeichnet ist, daß man eine wäßrige Emulsion eines vernetzten Homo- oder Copolymerisats eines $C_1$-$C_{10}$-Alkylacrylats mit einem mittleren Kautschukteilchendurchmesser von 100 bis 800 nm (ermittelt durch Lichtstreuung) in einer organischen Flüssigkeit als Dispergiermittel, die besteht aus
a) einem $C_1$-$C_{10}$-Alkylacrylat oder Alkylmethacrylat, oder
b) einem Gemisch aus 85 bis 50 Gew.-% Styrol oder $\alpha$-Methylstyrol und 15 bis 50 Gew.-% Acrylnitril oder Methacrylnitril oder $C_1$-$C_6$-Alkylacrylat oder Alkylmethacrylat, oder
c) einem Gemisch aus 85 bis 50 Gew.-% $C_1$-$C_{10}$-Alkylacrylat oder Alkylmethacrylat und 15 bis 50 Gew.-% Acrylnitril, Methacrylnitril und/oder Styrol.
wobei a), b) und c) bis zu 60 Gew.-% eines flüssigen Kohlenwasserstoffs zugemischt enthalten können, in Anwesenheit von 0,005 bis 4 Gew.-% eines Dispergators unter Agitation verteilt, und daß man unter weiterer Agitation ein Koaguliermittel für den Latex zufügt in einer zum Brechen des wäßrigen Latex ausreichenden Menge.

Die kautschukartigen Homo- oder Copolymerisate von $C_1$-$C_{10}$-Alkylacrylaten enthalten mindestens 50 Gew.-%, bevorzugt mehr als 70 Gew.-%, Gel. Die Kautschuke liegen im allgemeinen als durch Emulsionspolymerisation erhaltene wäßrige Kautschukdispersionen, als Latices, vor. Sie enthalten als Kautschuke Homopolymerisate von $C_1$-$C_{10}$-Alkylacrylaten, beispielsweise Homopolymerisate von Methylacrylat, Ethylacrylat, n-Butylacrylat oder Copolymerisate mit bis zu 40 Gew.-%, bevorzugt nicht mehr als 10 Gew.-%, Monovinylverbindungen, wie beispielsweise Acrylnitril, Methacrylnitril, Vinylbutylether, Vinylmethylether, Styrol, $\alpha$-Methylstyrol, Chlorstyrol, p-tert.-Butylstyrol, Methylstyrol, Acrylsäure, Metacrylsäure, Methyl-, Ethyl-, Propyl-, n-Butyl-, tert.-Butylacrylate und -methacrylate, Vinylsulfonsäure. Sie enthalten auch bis zu 8 Gew.-%, bevorzugt bis zu 4 Gew.-%, Divinyl- oder Polyvinylverbindungen oder Polyallylverbindungen und/oder n-Methylolacrylamid- (oder Methacrylamid-) Derivate, die dann als Vernetzer wirken. Beispiele sind Divinylbenzol, Ethylenglykol-, Propylenglykol-, Butylenglykol-, Polyalkylenoxidglykolacrylsäureester oder -methacrylsäureester, Triallylcyanurat, Methacrylsäurevinylester, N-Methylolacrylamide oder -methacrylamide, Butadien, Isopren. Bevorzugte Acrylatkautschuke sind vernetzte Poly-n-butylacrylate, die als vernetzende Monomere bis zu 5 Gew.-% 1,2-Butandioldiacrylat und/oder Butadien und/oder N-Methoxymethylacrylamid und/oder Triallylcyanurat enthalten.

2

Flüssige Kohlenwasserstoffe, die den Dispergiermitteln C) zugesetzt werden können, sind insbesondere aliphatische oder aromatische, gegebenenfalls halogenierte Kohlenwasserstoffe, beispielsweise Pentan, Hexan, Cyclohexan, Heptan, niedermolekulare Paraffingemische, Benzol, Toluol, Xylol, bzw. deren Halogenderivate, z.B. Chloroform Methylenchlorid, Chlorbenzol, Dichlorbenzol, Dichlorethylen.

Zur Durchführung des Verfahrens zur Herstellung der Dispersionen suspendiert man einen Latex eines Acrylathomo- oder -copolymerisats in einem der oben angegebenen Dispergiermittel. Man setzt dazu dem Dispergiermittel 0,005 bis 4 Gew.-% eines Dispergators zu. An sich kann man alle bekannten und üblichen Dispergatoren verwenden, besonders bevorzugt sind aber Acrylsäureester oder Methacrylsäureester, langkettiger Monoalkohol, partielle Umsetzungsprodukte aus Maleinsäure/γ-Olefincopolymerisaten und langkettigen Alkanolen, langkettige aliphatische Carbonsäuren, Harzsäuren, hochmolekulare Alkohole, Ester, Ether und/oder Polyolefine, z.B. lösliche Polybutadiene. Das Suspendieren der Latices in den organischen Flüssigkeiten erfordert starkes Rühren. Im allgemeinen kann man etwa 3 bis 50 Gew.-Teile Latex in 100 Gew.-Teilen organische Flüssigkeit suspendieren. Da die Latices im allgemeinen 30 bis 60 Gew.-% Feststoff enthalten, bedeutet dies einen Kautschukgehalt von 1 bis 20 Gew.-% in der organischen Dispersion.

Anschließend fügt man unter Rühren zu der Kautschukemulsions-Suspension in der organischen Flüssigkeit ein Koagulierungsmittel zu, in einer Menge, die ausreicht, die wäßrige Emulsion des Kautschuks zu brechen. Normalerweise arbeitet man dabei mit einer Menge eines Koagulierungsmittels, die ungefähr 2 bis 20 Gew.-%, bezogen auf den Feststoffgehalt der zu dispergierenden wäßrigen Emulsion, ausmacht. Dabei bildet sich bei einer Temperatur von 0 bis 100 °C, vorzugsweise bei 20 bis 50 °C, sofort oder nach spätestens 1 Stunde die erfindungsgemäße Dispersion aus, die neben dem dispergierten Kautschuk Wasser als Wasser-in-Öl-Emulsion enthält.

Dieses Wasser kann, falls erwünscht, abgetrennt werden, indem man entweder (durch Zufügen von Elektrolyten, wie Säuren oder Basen) die Wasser-in-Öl-Emulsion selektiv bricht und das Wasser als separate Phase abtrennt, oder indem man das Wasser sofort, ohne Koagulation, azeotrop abdestilliert. Die wasserhaltigen, erfindungsgemäßen Kautschukdispersionen sehen mehr oder weniger milchig aus, die wasserfreien sind opak. Ihre Eigenviskosität kann durch Säuren oder Basen verändert werden.

Die organischen Dispersion sind praktisch unempfindlich gegen Elektrolyte, Säuren oder Basen ; sie lassen sich mit großen Mengen bestimmter Lösungsmittel, z.B. aliphatischen Alkoholen, Ketonen (z.B. Aceton), Acetonitril, Dimethylformamid fällen.

Die erfindungsgemäßen Dispersionen lassen sich beispielsweise mit Hilfe von Radikalinitiatoren oder Redox-Initiatoren bei Raumtemperaturen von 0 bis 150 °C polymerisieren und aushärten. Wenn die Dispersionen zusätzlich noch Verstärkerfüllstoffe, Pigmente und so weiter enthalten, eignen sie sich zur Herstellung von schlagzähen Beschichtungen oder z.B. als Gießharze mit besonderen Eigenschaften, wie z.B. hoher Alterungsbeständigkeit.


(Siehe die Tabelle I, S. 4).


Allgemeine Vorschrift

800 Gew.-Teile eines organischen Mediums werden mit X Gew.-Teilen eines Dispergators verrührt. Unter Rühren fügt man nun 200 Gew.-Teile der wäßrigen Kautschuk-Emulsion hinzu. Anschließend gibt man in die Suspension Y Gew.-Teile eines Koagulierungsmittels und rührt 2 Minuten bei Raumtemperatur, wobei sich die Kautschukdispersionen in organischen Medien ausbilden (Tabelle 2).

Die verwendet Kautschuklatices zeigt die Tabelle 1, die verwendeten Dispergatoren die Tabelle 3.


(Siehe die Tabelle II, S. 5).


(Siehe die Tabelle III, S. 6).

Tabelle I

| Kaut-schuk-emul-sion | Kautschuk auf Basis | Kautschukgehalt[xx] der Latex (Gew.-%) ——————————— Gelgehalt (Gew.-%)[xxx] | Latex-teilchen-größe[x] (nm) | pH-Wert der wäß-rigen Latex |
|---|---|---|---|---|
| 1 | 98 Gew.-% n-Butylacrylat | 45 % | 120 | neutral |
|   | 2 Gew.-% Ethylenglykol-diacrylat | 79 % | | |
| 2 | 95 Gew.-% n-Butylacrylat | 40 % | 200 | sauer |
|   | 5 Gew.-% N-Methoxymethyl-acrylamid | 80 % | | |
| 3 | 70 Gew.-% n-Butylacrylat | 50 % | 250 | alkalisch |
|   | 25 Gew.-% Acrylnitril | 90 % | | |
|   | 5 Gew.-% Ethylendiamin-bis-acrylamid | | | |

[x] gemessen mit Hilfe der Lichtstreuung; siehe dazu: "Polymeranalytik", M. Hoffmann u.a., Georg Thieme Verlag, Stuttgart (1977)

[xx] bezogen auf gesamte Gewichtsmenge der Emulsion

[xxx] bezogen auf 100 Gew.-Teile des in Emulsion vorliegenden Kautschuks

Tabelle II

| Bei-spiel | Kaut-schuk-Emul-sion | Art des org.[xx] Mediums (Gew.-%) | Art des Koagulie-rungsmittels in Y Gew.-Teilen | Art des Disperga-tors in X Gew.-teilen[xx] | Rühr-zeit in Z Min. | Kautschuk-teilchen-größe[x] im org. Medium (nm) |
|---|---|---|---|---|---|---|
| 1 | 1 | 72 Styrol 28 Acrylnitril | 1 1n-NaOH | 0,2 Dispergator A | 30 | 310 |
| 2 | 2 | " | " | " | " | 425 |
| 3 | 3 | " | 1 Essigsäure | " | " | 485 |
| 4 | 1 | " | 1 1n-NaOH | 0,3 Dispergator B | " | 315 |
| 5 | 1 | " | " | 0,3 Dispergator C | " | 325 |
| 6 | 2 | 100 Methyl-methacrylat | " | " | " | 430 |
| 7 | 2 | 100 Butyl-acrylat | " | " | " | 455 |

x) bestimmt durch Lichtstreuungsmessungen

xx) %-Angaben bezogen auf 800 Gew.-Teile in der Allgem. Vorschrift

xxx) Zur Erläuterung der Dispergatoren siehe Tab. 3

Tabelle III

In Tabelle 2 eingesetzte Dispergatoren

**Typ**

A  =  Umsetzungsprodukte von Maleinsäureanhydrid-1-Olefin-Copolymeren mit höheren Alkanolen (siehe dazu G. Sackmann u.a. Angew. Makromol. Chemie 69 (1978), Nr. 1041, S. 141 - 156).

B  =  Polydecylmethacrylat

C  =  Disproportionierte Abietinsäure

**Ansprüche**

1. Stabile, fließfähige Dispersionen von Kautschuken in Form diskreter Teilchen eines mittleren Durchmessers von 100 bis 3 000 nm in organischen Flüssigkeiten, die enthalten :

A. als Kautschuk 1 bis 20 Gew.-% (bezogen auf Gesamtdispersion) eines vernetzten Homo- oder Copolymerisats eines $C_1$-$C_{10}$-Alkylacrylats ;

B. 0 bis 20 Gew.-% (bezogen auf Gesamtdispersion) Wasser in Form einer Wasser-in-Öl-Emulsion ;

C. als kontinuierliche organische Phase 99 bis 60 Gew.-% (bezogen auf Gesamtdispersion)

a) $C_1$-$C_{10}$-Alkylacrylate oder Alkylmethacrylate, vorzugsweise Methylmethacrylat, Ethylacrylat oder n-Hexylacrylat, oder

b) ein Gemisch aus 85 bis 50 Gew.-% Styrol oder α-Methylstyrol und 15 bis 50 Gew.-% Acrylnitril, Methacrylnitril oder $C_1$-$C_6$-Alkylacrylate oder Alkylmethacrylate, oder

c) ein Gemisch aus 85 bis 50 Gew.-% $C_1$-$C_{10}$-Alkylacrylat oder Alkylmethacrylat und 15 bis 50 Gew.-% Acrylnitril, Methacrylnitril oder Styrol,

wobei a), b) und c) bis zu 60 Gew.-% eines flüssigen Kohlenwasserstoffs zugemischt enthalten können.

2. Verfahren zur Herstellung der stabilen, fließfähigen Kautschukdispersionen nach Anspruch 1, dadurch gekennzeichnet, daß man eine wäßrige Emulsion eines vernetzten Homo- oder Copolymerisats eines $C_1$-$C_{10}$-Alkylacrylats mit einem mittleren Kautschukteilchendurchmesser von 100 bis 800 nm (ermittelt durch Lichtstreuung) in einer organischen Flüssigkeit als Dispergiermittel, die besteht aus

a) einem $C_1$-$C_{10}$-Alkylacrylat oder Alkylmethacrylat, oder

b) einem Gemisch aus 85 bis 50 Gew.-% Styrol oder α-Methylstyrol und 15 bis 50 Gew.-% Acrylnitril oder Methacrylnitril oder $C_1$-$C_6$-Alkylacrylat oder Alkylmethacrylat, oder

c) einem Gemisch aus 85 bis 50 Gew.-% $C_1$-$C_{10}$-Alkylacrylat oder Alkylmethacrylat und 15 bis 50 Gew.-% Acrylnitril, Methacrylnitril und/oder Styrol,

wobei a), b) und c) bis zu 60 Gew.-% eines flüssigen Kohlenwasserstoffs zugemischt enthalten können, in Anwesenheit von 0,005 bis 4 Gew.-% eines Dispergators unter Agitation verteilt, und daß man unter weiterer Agitation ein Koaguliermittel für den Latex zufügr in einer zum Brechen des wäßrigen Latex ausreichenden Menge.

**Claims**

1. Stable, flowable dispersions of rubbers in the form of discrete particles having an average diameter of 100 to 3 000 nm in organic liquids, which contain :

A. as rubber, 1 to 20 % by weight (based on the total weight of the dispersion) of a cross-linked homopolymer or copolymer of a $C_1$-$C_{10}$ alkylacrylate ;

B. 0 to 20 % by weight (based on the total weight of the dispersion) of water in the form of a water-in-oil emulsion ;

C. as continuous organic phase, 99 to 60 % by weight (based on the total weight of the dispersion) of

a) $C_1$-$C_{10}$ alkylacrylates or alkylmethacrylates, preferably methylmethacrylate, ethylacrylate or n-hexylacrylate, or

b) a mixture of 85 to 50 % by weight of styrene or α-methylstyrene and 15 to 50 % by weight of acrylonitrile, methacrylonitrile, or $C_1$-$C_6$ alkylacrylates or alkylmethacrylates, or

c) a mixture of 85 to 50 % by weight of $C_1$-$C_{10}$ alkylacrylate or alkylmethacrylate and 15 to 50 % by weight of acrylonitrile, methacrylnitrile or styrene,

wherein a), b) and c) can contain up to 60 % by weight of a liquid hydrocarbon.

2. Process for the production of the stable, flowable rubber dispersions according to Claim 1, characterised in that an aqueous emulsion of a cross-linked homopolymer or copolymer of a $C_1$-$C_{10}$alkylacrylate having an average rubber particle diameter of 100 to 800 nm (as determined by light scattering) is distributed in an organic liquid as dispersant, comprising

a) a $C_1$-$C_{10}$ alkylacrylate or alkylmethacrylate, or

b) a mixture of 85 to 50 % by weight of styrene or α-methylstyrene and 15 to 50 % by weight of acrylonitrile or methacrylonitrile or a $C_1$-$C_6$ alkylacrylate or alkylmethacrylate, or

c) a mixture of 85 to 50 % by weight of $C_1$-$C_{10}$ alkylacrylate or alkylmethacrylate and 15 to 50 % by weight of acrylonitrile, methacrylonitrile and/or styrene,

wherein a), b) and c) can contain up to 60 % by weight of a liquid hydrocarbon, in the presence of 0,005 to 4 % by weight of a dispersing agent with stirring and in that a coagulant for the latex is added with continued stirring in a quantity which is sufficient to break the aqueous latex.

**Revendications**

1. Dispersions fluides et stables de caoutchoucs sous forme de particules discrètes d'un diamètre moyen de 100 à 3 000 nm dans des liquides organiques, qui contiennent :

A. comme caoutchouc 1 à 20 % en poids (par rapport à la dispersion totale) d'un homo- ou

7

copolymère réticulé d'un acrylate d'alcoyle en $C_1$-$C_{10}$ ;

B. 0 à 20 % en poids (par rapport à la dispersion totale) d'eau sous forme d'une émulsion eau-dans-l'huile ;

C. comme phase organique continue 99 à 60 % en poids (par rapport à la dispersion totale)

a) d'acrylate d'alcoyle en $C_1$-$C_{10}$ ou méthacrylates d'alcoyle, de préférence du méthacrylate de méthyle, acrylate d'éthyle ou acrylate de n-hexyle, ou

b) d'un mélange à 85-50 % en poids de styrène ou d'$\alpha$-méthylstyrène et à 15-50 % en poids d'acrylonitrile, méthacrylonitrile ou acrylates d'alcoyle en $C_1$-$C_6$ ou méthacrylates d'alcoyle, ou

c) d'un mélange à 85-50 % en poids d'acrylate d'alcoyle en $C_1$-$C_{10}$ ou méthacrylate d'alcoyle et à 15-50 % en poids d'acrylonitrile, méthacrylonitrile ou styrène,

a), b) et c) pouvant contenir en mélange jusqu'à 60 % en poids d'un hydrocarbure liquide.

2. Procédé de fabrication des dispersions stables et fluides de caoutchouc selon la revendication 1, caractérisé en ce qu'on distribue sous agitation une émulsion aqueuse d'un homo- ou copolymère réticulé d'un acrylate d'alcoyle en $C_1$-$C_{10}$ ayant un diamètre moyen de particule de caoutchouc de 100 à 800 nm (déterminé par diffraction de la lumière) dans un liquide organique comme dispersant, lequel consite en

a) un acrylate d'alcoyle en $C_1$-$C_{10}$ ou méthacrylate d'alcoyle, ou en

b) un mélange à 85-50 % en poids de styrène ou d'$\alpha$-méthylstyrène et à 15 à 50 % en poids d'acrylonitrile ou de méthacrylonitrile ou d'acrylate d'alcoyle en $C_1$-$C_6$ ou méthacrylate d'alcoyle, ou en

c) un mélange à 85-50 % en poids d'acrylate d'alcoyle en $C_1$-$C_{10}$ ou méthacrylate d'alcoyle et à 15 à 50 % en poids d'acrylonitrile, méthacrylonitrile et/ou styrène.

a), b) et c) pouvant contenir en mélange jusqu'à 60 % en poids d'un hydrocarbure liquide, en présence de 0,005 à 4 % en poids d'un dispersant, et en ce que tout en poursuivant l'agitation on ajoute un agent de coagulation du latex en une quantité suffisante pour rompre le latex aqueux.